Europäisches Patentamt

European Patent Office

Office européen des brevets

(19)

(11) Veröffentlichungsnummer: **0 199 146**
**B1**

(12) **EUROPÄISCHE PATENTSCHRIFT**

(45) Veröffentlichungstag der Patentschrift:
11.10.89

(21) Anmeldenummer: 86104431.1

(22) Anmeldetag: 01.04.86

(51) Int. Cl.⁴: **B 25 J 9/04**, B 25 J 9/10

(54) **Industrieroboter mit Schwenkarm.**

(30) Priorität: 16.04.85 DE 3513638

(43) Veröffentlichungstag der Anmeldung:
29.10.86 Patentblatt 86/44

(45) Bekanntmachung des Hinweises auf die Patenterteilung: 11.10.89 Patentblatt 89/41

(84) Benannte Vertragsstaaten:
DE FR IT SE

(56) Entgegenhaltungen:
EP—A— 0 096 634
EP—A— 0 102 082
EP—A— 0 169 419
US—A— 4 036 374

(73) Patentinhaber: **Siemens Aktiengesellschaft**
**Wittelsbacherplatz 2**
**D-8000 München 2 (DE)**

(72) Erfinder: **Eberle, Manfred**
**Würzburger Ring 70**
**D-8520 Erlangen (DE)**
Erfinder: **Keppler, Rainer**
**Gartenstrasse 24**
**D-8523 Baiersdorf (DE)**
Erfinder: **Köslich, Bernd**
**Bussardweg 2**
**D-8522 Herzogenaurach-Niderndorf (DE)**

EP 0 199 146 B1

Jouve, 18, rue St-Denis, 75001 Paris, France

## Beschreibung

Die Erfindung bezieht sich auf einen Industrieroboter mit Schwenkarm, bei dem zwei aufeinanderfolgende Armteile in zueinander parallelen Horizontalebenen schwenkbar sind und anschließend mindestens eine Dreh- und eine Hubachse vorgesehen sind.

Mit diesem Oberbegriff wird im wesentlichen auf eine Anordnung Bezug genommen, wie sie beispielsweise aus der US-A-43 48 142 (Figur 1) bekannt ist.

Häufig werden heute zum Antrieb in den einzelnen Roboterachsen elektrische Einzelantriebe benutzt (vgl. z. B. EP-A-102 082 oder DE-B-11 48 721). Falls die Antriebe in die einzelnen Achsen integriert sind, bekommt man zwar sehr präzise Bewegungen, muß aber andererseits in Kauf nehmen, daß u. U. die Einheiten an der Roboterspitze relativ schwer und groß werden, so daß sich Schwierigkeiten bei diffizilen Arbeitsvorgängen hoher Geschwindigkeit ergeben können.

Die Aufgabe der vorliegenden Erfindung besteht darin, die Dreh-Hubachse an der Roboterspitze, d. h. an der an den Schwenkarm anschließenden Stelle konstruktuv so zu gestalten, daß gedrungene Bauform mit relativ geringem Trägheitsmoment vereinbar sind.

Diese Aufgabe wird durch den Roboter gemäß Anspruch 1 gelost.

Zur Bewegung der Hubachse kann dabei ein Drehantrieb dienen, der über einen Hebel mit der Hubachse verbunden ist, während zur Bewegung der Drehachse ein Zahnriemengetriebe diennen kann, das mit einem im Schwenkarm angeordneten elektrischen Motor gekuppelt ist.

Die kombinierte Hub-Drehachse kann dabei im wesentlichen konstruktiv zylindrisch gestaltet sein, wobei der äußere drehbare Teil durch das Zahnriemengetriebe angetrieben wird, während der innen längsverschieblich gelagerte Hubteil über den Hebel bewegt wird. Durch diese Konstruktion können zentrisch auch die elektrischen und pneumatischen Anschlußleitungen für einen nachfolgenden Greifer geführt sein.

Anhand eines in der Zeichnung dargestellten Ausführungsbeispiels sei die Erfindung näher erläutert; es zeigen:

Figur 1 eine schematische Seitenansicht des Roboters,

Figur 2 eine Draufsicht auf den Roboter und

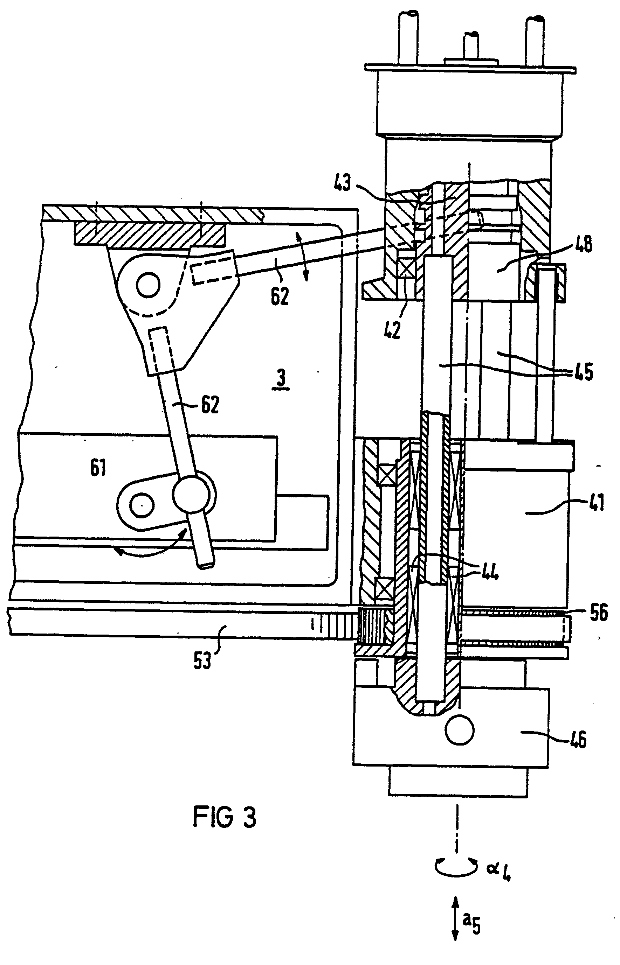

Figur 3 nähere Details der kombinierten Schwenk-Hubachse.

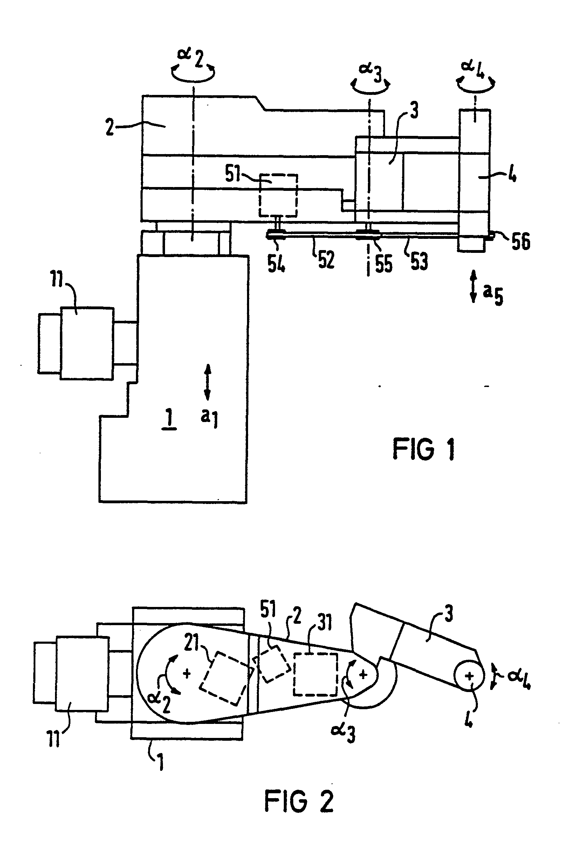

Wie aus Figur 1 ersichtlich, besteht der dargestellte Horizontalroboter aus einem Hubteil 1 mit einem elektromotorischen Antrieb 11, durch das der Schwenkarm mit den Armteilen 2 und 3 vertikal in Richtung des Doppelpfeiles a1 verschiebbar ist. Der Armteil 2 des Schwenkarmes ist durch einen nicht dargestellten Elektroantrieb mit Getriebe um die Drehachse mit dem Winkel $\alpha 2$ schwenkbar. Am vorderen Ende dieses konisch zulaufenden Armteiles 2 ist ein Drehgelenk angeordnet, um das mit dem Winkel $\alpha 3$ der zweite Armteil 3 schwenkbar ist.

Am vorderen Ende des Armteiles 3 findet sich dann noch eine weitere Einheit in Form einer kombinierten Schwenk-Hubachse 4 mit dem Drehwinkel $\alpha 4$ und der Hubbewegung a5.

Wie aus der Zeichnung ersichtlich, besteht die kombinierte Schwenk-Hubachse 4 am Ende des Armteiles 3 aus einer Halterung 41, in der über Lager 42 drehbar ein als Schwenkachse dienendes Drehteil 43 gelagert ist. In diesem Drehteil 43 ist über Kugelbüchsen 44 axial das Hubteil 48 gelagert, welches im wesentlichen aus Führungsrohren 45 und einer Endplattes 46 besteht.

Zum Antrieb des Drehteils 43 dient ein im Armteil 2 vertikal angeordneter Elektromotor 51, dessen Bewegung über zwei Zahnriemen 52 und 53 und entsprechende Zahnriemenrollen 54, 55 und 56 auf die Drehachse mit dem Drehteil 43 übertragen wird.

Zur Hubbewegung dient ein im Armteil 3 angeordneter pneumatischer Drehantrieb 61, dessen Drehbewegung über einen gelenkig gelagerten Hebel 62, der in einem im Hubteil 48 angeordneten Auge 47 mündet, in eine entsprechende Hubbewegung a5 des Hubteiles 48 umgesetzt wird.

## Patentanspruch

Industrieroboter mit Schwenkarm, bei dem zwei aufeinanderfolgende Armteile (2, 3) in zueinander parallelen Horizontalebenen schwenkbar sind und anschließend mindestens eine kombinierte Dreh- und Hubachse (4) vorgesehen ist, wobei die Bewegung in der Drehachse (4) und die Bewegung der in der Drehachse längsverschieblich gelagerten Hubachse (a5) von im Schwenkarm (2, 3) angeordneten Antrieben (51, 61) abgeleitet sind, gekennzeichnet durch eine zylindrische Drehachse mit Außenantrieb durch Zahnriemen (53) und durch eine Hubachse (a5), die über einen gelenkig gelagerten Hebel (62) von einem pneumatischen Drehantrieb (61) bewegbar ist.

## Claim

Industrial robot with swivel arm, in which two consecutive arm parts (2, 3) can be swivelled in horizontal planes which are parallel to one another, and at least one combined rotary and lifting axis (4) is subsequently provided, whereby the movement in the rotary axis (4), and the movement of the lifting axis (a5), which is supported in the rotary axis so that it can move in the longitudinal direction, are derived from drives (51, 61) arranged in the swivel arm (2, 3), characterised by a cylindrical rotary shaft having external drive by means of a toothed belt (53), and by a lifting axis (a5) which can be moved by a pneumatic rotary drive (61) by way of a hinged lever (62).

**Revendication**

Robot industriel comportant un bras pivotant et dans lequel deux éléments de bras (2, 3), disposés à la suite l'un de l'autre, peuvent pivoter dans des plans horizontaux parallèles et dans lequel, en outre, il est prévu au moins un axe combiné de rotation et de levage (4), le déplacement suivant l'axe de rotation (4) et le déplacement de l'axe de levage (a5), monté de manière à être déplaçable longitudinalement sur l'axe de rotation, étant obtenus à partir de dispositifs d'entraînement (51, 61) installés dans le bras pivotant (2, 3), caractérisé par un axe de rotation cylindrique avec un dispositif d'entraînement extérieur au moyen d'une courroie dentée (53), et par un axe de levage (a5), qui est déplaçable par un dispositif pneumatique d'entraînement en rotation (61), par l'intermédiaire d'un levier (64) monté de façon articulée.

$\alpha_2$   $\alpha_3$   $\alpha_4$

2   3   4

51   56

54   52   55   53

$a_5$

11

1   $a_1$

FIG 1

51   2   31   3

21   $\alpha_4$

$\alpha_2$   $\alpha_3$   4

11   1

FIG 2

FIG 3